(19) **Europäisches Patentamt / European Patent Office / Office européen des brevets**

(11) **EP 3 159 680 A1**

(12) **EUROPEAN PATENT APPLICATION**
published in accordance with Art. 153(4) EPC

(43) Date of publication:
26.04.2017 Bulletin 2017/17

(21) Application number: 15809419.3

(22) Date of filing: 17.06.2015

(51) Int Cl.:
$G01N\ 23/207^{(2006.01)}$   $C01B\ 33/035^{(2006.01)}$

(86) International application number:
PCT/JP2015/003022

(87) International publication number:
WO 2015/194170 (23.12.2015 Gazette 2015/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 17.06.2014 JP 2014124542

(71) Applicant: Shin-Etsu Chemical Co., Ltd.
Tokyo 100-0004 (JP)

(72) Inventors:
• MIYAO, Shuichi
Joetsu-shi
Niigata 942-8601 (JP)
• NETSU, Shigeyoshi
Joetsu-shi
Niigata 942-8601 (JP)

(74) Representative: Smaggasgale, Gillian Helen
WP Thompson
138 Fetter Lane
London EC4A 1BT (GB)

(54) **SURFACE TEMPERATURE CALCULATION METHOD AND CONTROL METHOD FOR POLYCRYSTALLINE SILICON ROD, METHOD FOR PRODUCTION OF POLYCRYSTALLINE SILICON ROD, POLYCRYSTALLINE SILICON ROD, AND POLYCRYSTALLINE SILICON INGOT**

(57) An average diffraction intensity ratio (y = ($h_1$, $k_1$, $l_1$)/($h_2$, $k_2$, $l_2$)) for a rotation angle ($\varphi$) is obtained from a first diffraction chart and a second diffraction chart, and a surface temperature during deposition is calculated based on this average diffraction intensity ratio. Based on data on the surface temperature of a polycrystalline silicon rod calculated and supplied current and applied voltage during the deposition of the polycrystalline silicon rod, the supplied current and the applied voltage when newly manufacturing a polycrystalline silicon rod is controlled to control a surface temperature during the deposition process. By using such a temperature control method, it is also possible to control the difference $\Delta T$ (= $T_c$ - $T_s$) between the center temperature $T_c$ and the surface temperature $T_s$ of a polycrystalline silicon rod during a deposition process to control the value of residual stress in the polycrystalline silicon rod.

FIG.4

TAKE PLATE-SHAPED SAMPLE HAVING CROSS SECTION PERPENDICULAR TO RADIAL DIRECTION OF POLYCRYSTALLINE SILICON ROD AS MAJOR SURFACE — S101

OBTAIN FIRST DIFFRACTION CHART SHOWING ROTATION ANGLE DEPENDENCE OF INTENSITY OF BRAGG REFLECTION FROM MILLER INDEX PLANE ($h_1$, $k_1$, $l_1$) — S102

OBTAIN SECOND DIFFRACTION CHART SHOWING ROTATION ANGLE DEPENDENCE OF INTENSITY OF BRAGG REFLECTION FROM MILLER INDEX PLANE ($h_2$, $k_2$, $l_2$) — S103

OBTAIN AVERAGE DIFFRACTION INTENSITY RATIO (y) FROM FIRST DIFFRACTION CHART AND SECOND DIFFRACTION CHART — S104

CALCULATE SURFACE TEMPERATURE AT POSITION CORRESPONDING TO RADIUS R OF POLYCRYSTALLINE SILICON ROD DURING DEPOSITION BASED ON AVERAGE DIFFRACTION INTENSITY RATIO (y) — S105

**Description**

Technical Field

The present invention relates to a technique for calculating or controlling a surface temperature during a deposition process when manufacturing a polycrystalline silicon rod by the Siemens process.

Background Art

High purity and high quality silicon substrates are semiconductor materials essential for the manufacture of today's semiconductor devices and the like.

Such silicon substrates are manufactured by the CZ method or the FZ method using polycrystalline silicon as a raw material, and polycrystalline silicon of a semiconductor grade is manufactured by the Siemens process in many cases (for example, see Patent Literature 1 (National Publication of International Patent Application No. 2004-532786)). The Siemens process is a method of bringing a silane raw material gas such as trichlorosilane or monosilane into contact with a heated silicon core wire to vapor-phase-grow (deposit) polycrystalline silicon on the surface of the silicon core wire by a CVD (Chemical Vapor Deposition) method.

In the Siemens process, generally, hydrogen gas as a carrier gas and trichlorosilane as a raw material gas are used as reaction gases. In addition, in order to increase trichlorosilane gas concentration as much as possible and increase polycrystalline silicon deposition rate for increasing the productivity of polycrystalline silicon, the reaction temperature in a bell jar is controlled in the range of roughly 900°C to about 1200°C.

One of methods for measuring the surface temperature of a polycrystalline silicon rod during the process of manufacturing polycrystalline silicon by the Siemens process is disclosed in Patent Literature 2 (Japanese Patent Laid-Open No. 2001-146499). The method disclosed in this literature is a method of (i) obtaining the resistivity of a silicon rod from the diameter of the silicon rod placed in a reaction furnace and voltage and current provided to the silicon rod, (ii) obtaining the temperature of the silicon rod using this resistivity, (iii) obtaining vapor phase growth rate at a particular point of time using this temperature, (iv) obtaining the diameter of the silicon rod after a lapse of a predetermined time from this vapor phase growth rate to update the diameter, and (v) repeating these procedures to obtain the diameter and temperature of the silicon rod for each predetermined time for control.

In the method disclosed in Reference Literature 2, it is described that the resistivity ($\rho$) of a silicon rod having an overall length L and a diameter D is obtained from the values of voltage (E) applied to the silicon rod and current (I) flowing through the silicon rod. Specifically, the resistivity ($\rho$) is obtained by the following equation (1).

The temperature (T) of the silicon rod is obtained from this resistivity ($\rho$) by the following equation (2). It is described that a, b, and c in equation 2 are constants, and known constants are used, or constants previously obtained by an experiment are used.

$$\text{Equation (1): } R = E/I = \rho \times L/(D/2)^2 \times \pi$$

$$\text{Equation (2): } T = a \times \ln{(\rho/b)} - c$$

But, this method has at least the following drawbacks from the viewpoint of measuring with high precision the surface temperature of a polycrystalline silicon rod during the process of manufacturing polycrystalline silicon by the Siemens process.

First, in this method, the diameter D of the polycrystalline silicon rod based on the premise that the temperature (T) of the polycrystalline silicon rod is obtained is assumed, and therefore the difference between the assumed diameter D and the actual diameter D directly becomes the error of the temperature T of the polycrystalline silicon rod.

Particularly, when popcorn-shaped crystal grains having high void ratio are present on the surface of the polycrystalline silicon rod, the substantial diameter (true value) is considerably smaller than the above assumed diameter, and as a result, the error of the calculated temperature T of the polycrystalline silicon rod increases.

In addition, the cross section of a polycrystalline silicon rod during a CVD step is not a perfect circle and is slightly elliptical, and moreover the ellipticity depends on the height of the polycrystalline silicon rod. In the method disclosed in Reference Literature 2, the site dependence of the diameter D of the polycrystalline silicon rod is not considered, and therefore the temperature of a particular site cannot be measured (estimated).

Second, as the deposition of polycrystalline silicon proceeds, the diameter D of the silicon rod increases naturally, and as the diameter increases, the current I flowing through the silicon rod easily flows through the central region of the silicon rod. This is due to the fact that the surface side of the silicon rod is cooled by the flow of gas to cause a non-negligible decrease in temperature. As the diameter of the silicon rod increases, the nonuniformity of temperature distribution inside the silicon rod becomes significant, and an attenuation curve according to distance is drawn from the center, and the central symmetry is low.

That is, the current I flowing through the polycrystalline silicon rod has such nonuniformity that the current I does not uniformly flow through the silicon rod, and a large amount of the current I flows through the central region, and on the other hand a small amount of the current I flows through a region in the vicinity of the surface. Such nonuniformity is not considered at all not only in the method disclosed in Reference Literature 2 but in conventional methods, and as a result, a large error of the temperature T of the silicon rod is caused.

The extent of such an error of the surface temperature T of the polycrystalline silicon rod depends on the extent of the error of the assumed diameter D of the silicon rod from the true value, and therefore there are the following problems. When the error of the assumed diameter D of the silicon rod is large, the error of the temperature T also increases. When the true temperature of the silicon rod is too high, the temperature locally and partially exceeds the melting point of silicon, 1420°C, to cause fusion cutting. When the true temperature of the silicon rod is too low, the deposition rate decreases significantly to decrease productivity.

On the other hand, there is also a method of measuring the surface temperature of a polycrystalline silicon rod by a radiation thermometer. But, trichlorosilane, which is a gas of a silicon raw material, is supplied into a reaction furnace, and therefore this trichlorosilane and dichlorosilane, silicon tetrachloride, hydrochloric acid, and $SiCl_2$, which are by-products of CVD, are present. These have a large dipole moment and therefore are infrared active substances, and these components absorb infrared light generated from the polycrystalline silicon rod, and therefore light path failure is caused, and accurate temperature cannot be measured.

For example, when the temperature of a polycrystalline silicon rod surface is measured by a radiation thermometer in a state in which only hydrogen gas is supplied into a reaction furnace, the difference in temperature in a state in which trichlorosilane is supplied is about several hundreds °C to 150°C. When a gas of trichlorosilane is supplied, the surface temperature decreases at once. This temperature decrease depends on the concentration and absolute amount of the supplied trichlorosilane gas. As the concentration of trichlorosilane and the amount of trichlorosilane supplied increase, the decrease in the value of the surface temperature of the polycrystalline silicon rod measured by the radiation thermometer becomes significant.

Due to such circumstances, the surface temperature of a polycrystalline silicon rod can be accurately measured by a radiation thermometer only at the stage of the initial aging of a silicon core wire before the start of a deposition reaction, and when the growth of the polycrystalline silicon rod is completed, which are when chlorosilane gas is not present in a reaction furnace, that is, only hydrogen gas is present.

Further, a fatal drawback is that measurement by a radiation thermometer is performed through an "observation window" worked on and attached to a reactor and therefore is limited the outermost rod in the reactor.

In order to grasp temperature distribution in a CVD reaction furnace, it is essential to find at least the temperature of the central portion in the furnace, but in a mode in which a plurality of silicon core wires are disposed in a furnace for productivity improvement (multi-ring type rod disposition), it is very difficult to ensure the light path of a radiation thermometer for monitoring the surface temperature of a polycrystalline silicon rod disposed and grown on the silicon core wire disposed in the central portion in the furnace. Even if the light path is ensured, various gas components are intricately mixed and flow in the light path as described above, and accurate temperature cannot be measured due to light path failure.

In this manner, the conventional methods must be said to be insufficient from the viewpoint of accurately measuring the surface temperature of a polycrystalline silicon rod during the process of manufacturing polycrystalline silicon by the Siemens process.

Citation List

Patent Literature

Patent Literature 1: National Publication of International Patent Application No. 2004-532786
Patent Literature 2: Japanese Patent Laid-Open No. 2001-146499
Patent Literature 3: Japanese Patent Laid-Open No. 2014-1096

Summary of Invention

Technical Problem

Accurately controlling with high precision the surface temperature of a polycrystalline silicon rod during the process of manufacturing polycrystalline silicon by the Siemens process is an extremely important technique not only from the viewpoint of ensuring the uniformity of crystal properties, controlling residual stress, and the like, but also from the practical viewpoint of obtaining mechanical strength (the degree of difficulty of fracturing) according to the use of polycrystalline silicon.

When the use of polycrystalline silicon is a raw material for monocrystalline silicon manufacture by the CZ method, the polycrystalline silicon preferably has moderate ease of breaking so as to be easily crushed into a nugget shape (polycrystalline silicon ingot).

On the other hand, when the use of polycrystalline silicon is a raw material for monocrystalline silicon manufacture by the FZ method, polycrystalline silicon that is not easily fractured so that a polycrystalline silicon rod does not fall, collapse, or the like in a state of being set in an FZ furnace, and has low residual stress is preferred.

In order to enable such making, it is essential to control with high precision the surface temperature of a polycrystalline silicon rod during a deposition process when manufacturing a polycrystalline silicon rod by the Siemens process, and it is difficult to accurately measure this by the conventional methods.

The present invention has been made in view of such problems, and it is an object of the present invention to provide a technique for manufacturing a polycrystalline silicon rod based on a new method for controlling with high precision the surface temperature of a polycrystalline silicon rod during a deposition process when manufacturing a polycrystalline silicon rod by the Siemens process.

Solution to Problem

In order to solve the above problems, a method for calculating a surface temperature of a polycrystalline silicon rod according to the present invention is a method for calculating a surface temperature of a polycrystalline silicon rod grown by a Siemens process, during a deposition process, comprising steps of taking a plate-shaped sample having a cross section perpendicular to a radial direction of the polycrystalline silicon rod as a major surface from a position corresponding to a radius R from a center line of a silicon core wire on which the polycrystalline silicon rod is deposited; disposing the plate-shaped sample at a position where Bragg reflection from a Miller index plane $(h_1, k_1, l_1)$ is detected, and in-plane-rotating the plate-shaped sample around a center of the plate-shaped sample as a rotation center at a rotation angle of $\varphi$ so that an X-ray irradiation region determined by a slit $\varphi$-scans the major surface of the plate-shaped sample, thereby obtaining a first diffraction chart showing dependence of an intensity of Bragg reflection from the Miller index plane $(h_1, k_1, l_1)$ on the rotation angle $(\varphi)$ of the plate-shaped sample; disposing the plate-shaped sample at a position where Bragg reflection from a Miller index plane $(h_2, k_2, l_2)$ is detected, and in-plane-rotating the plate-shaped sample around the center of the plate-shaped sample as the rotation center at the rotation angle of $\varphi$ so that an X-ray irradiation region determined by the slit $\varphi$-scans the major surface of the plate-shaped sample, thereby obtaining a second diffraction chart showing dependence of an intensity of Bragg reflection from the Miller index plane $(h_2, k_2, l_2)$ on the rotation angle $(\varphi)$ of the plate-shaped sample; obtaining an average diffraction intensity ratio $(y = (h_1, k_1, l_1)/(h_2, k_2, l_2))$ for the rotation angle $(\varphi)$ from the first diffraction chart and the second diffraction chart; and calculating a surface temperature at the position corresponding to the radius R of the polycrystalline silicon rod during deposition of polycrystalline silicon based on the average diffraction intensity ratio.

In a preferred aspect, the calculation of the surface temperature is made based on a conversion table of an average diffraction intensity ratio (y) to a surface temperature previously obtained.

Preferably, the conversion table is based on a conversion equation obtained by expressing a relationship between an estimated temperature x and the average diffraction intensity ratio y as a regression equation when the estimated temperature based on a resistivity of a polycrystalline silicon rod calculated from a diameter of the polycrystalline silicon rod and supplied current and applied voltage to the polycrystalline silicon rod is x.

In addition, preferably, the Miller index plane $(h_1, k_1, l_1)$ and the Miller index plane $(h_2, k_2, l_2)$ are (111) and (220).

A method for controlling a surface temperature of a polycrystalline silicon rod according to the present invention is a temperature control method when manufacturing a polycrystalline silicon rod by a Siemens process, comprising, based on data on a surface temperature of a polycrystalline silicon rod calculated by the above-described method and supplied current and applied voltage during deposition of the polycrystalline silicon rod, controlling supplied current and applied voltage when newly manufacturing a polycrystalline silicon rod, to control a surface temperature during a deposition process.

A method for manufacturing a polycrystalline silicon rod according to the present invention comprises controlling a difference $\Delta T (= T_c - T_s)$ between a center temperature $T_c$ and a surface temperature $T_s$ of a polycrystalline silicon rod during a deposition process using the above-described temperature control method, to control a value of residual stress in the polycrystalline silicon rod.

In a preferred aspect, the $\Delta T$ during the deposition process is consistently controlled at 70°C or less.

In the present invention, a polycrystalline silicon rod grown by controlling the $\Delta T$ at 160°C or more in the method for manufacturing a polycrystalline silicon rod described above may be obtained.

In addition, in the present invention, a polycrystalline silicon ingot obtained by fracturing the above-described polycrystalline silicon rod may be obtained.

Further, in the present invention, a polycrystalline silicon rod grown by controlling the $\Delta T$ at less than 160°C in the method for manufacturing a polycrystalline silicon rod described above may be obtained.

Advantageous Effects of Invention

In the present invention, when the temperature when a polycrystalline silicon rod is manufactured by the Siemens process is controlled, it is possible to, based on data on the surface temperature of a polycrystalline silicon rod calculated by the above-described method and supplied current and applied voltage during the deposition of the polycrystalline silicon rod, control supplied current and applied voltage when newly manufacturing a polycrystalline silicon rod, to control a surface temperature during the deposition process. By using such a temperature control method, it is also possible to control the difference $\Delta T$ $(= T_c - T_s)$ between the center temperature $T_c$ and the surface temperature $T_s$ of a polycrystalline silicon rod during a deposition process to control the value of residual stress in the polycrystalline silicon rod.

In this manner, a new method for controlling with high precision the surface temperature of a polycrystalline silicon rod during a deposition process when manufacturing a polycrystalline silicon rod by the Siemens process is provided by the present invention, and based on this, a technique for manufacturing a polycrystalline silicon rod is provided.

Brief Description of Drawings

[Figure 1A] Figure 1A is a diagram for explaining an example of the taking of plate-shaped samples for X-ray diffraction measurement from a polycrystalline silicon rod deposited and grown by the Siemens process.

[Figure 1B] Figure 1B is a diagram for explaining an example of the taking of plate-shaped samples for X-ray diffraction measurement from a polycrystalline silicon rod deposited and grown by the Siemens process.

[Figure 2] Figure 2 is a diagram for explaining the outline of an example of a measurement system when obtaining an X-ray diffraction profile from a plate-shaped sample by a $\varphi$ scan method.

[Figure 3] Figure 3 is one example of charts obtained by performing the $\varphi$ scan measurement shown in Figure 2 for Miller index planes (111) and (220).

[Figure 4] Figure 4 is a flow diagram for explaining the outline of a method for calculating the surface temperature of a polycrystalline silicon rod according to the present invention.

[Figure 5] Figure 5 shows the ratio between a first diffraction chart from a Miller index plane (1,1,1) and a second diffraction chart from a Miller index plane (2,2,0) (= (1,1,1)/ (2,2,0)) obtained using plate-shaped samples taken from various R.

[Figure 6] Figure 6 is a diagram showing the relationship between an estimated temperature x and (111)/(220) ratio when the diameter of a polycrystalline silicon rod is in the range of 10 to 30 mm.

[Figure 7] Figure 7 shows diffraction charts from a Miller index plane (111) and a Miller index plane (220) obtained by $\varphi$-scanning a plate-shaped sample taken from a position that is roughly $R^0/2$ in a polycrystalline silicon rod.

Description of Embodments

Embodiments of the present invention will be described below with reference to the drawings.

For the purpose of developing a new method for controlling with high precision the surface temperature of a polycrystalline silicon rod during a deposition process when manufacturing a polycrystalline silicon rod by the Siemens process, the present inventors have evaluated the crystallinity of polycrystalline silicon synthesized at various CVD temperatures by an X-ray diffraction method.

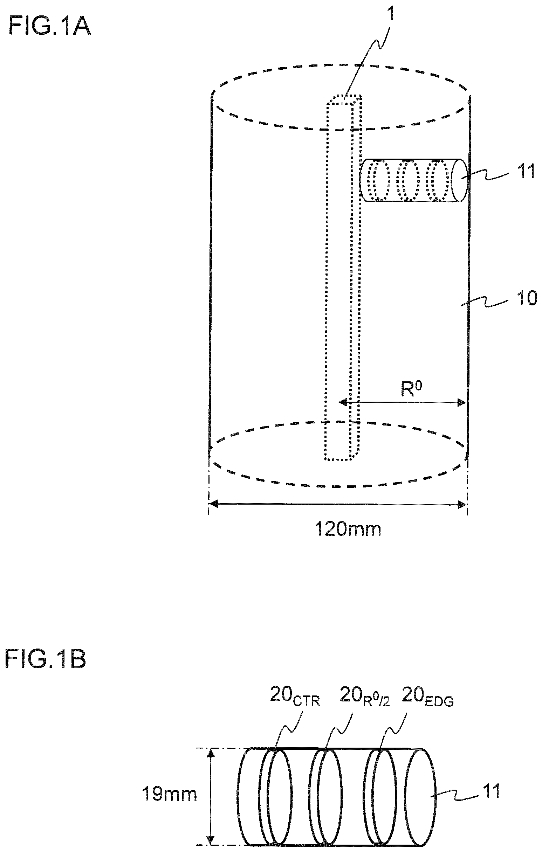

Figure 1A and Figure 1B are diagrams for explaining an example of the taking of plate-shaped samples 20 for X-ray diffraction profile measurement from a polycrystalline silicon rod 10 deposited and grown by the Siemens process. In the figure, numeral 1 denotes a silicon core wire on the surface of which polycrystalline silicon is deposited to form a silicon rod. In this example, in order to confirm the radial dependence of the surface temperature of the polycrystalline silicon rod during deposition, the plate-shaped samples 20 are taken from three sites (CTR: a site close to the silicon core wire 1, EDG: a site close to the side surface of the polycrystalline silicon rod 10, and $R^0/2$: an intermediate site between CTR and EGD), but the taking is not limited to taking from such sites.

The diameter of the polycrystalline silicon rod 10 illustrated in Figure 1A is roughly 120 mm (radius $R^0 \approx 60$ mm), and a rod 11 having a diameter of roughly 19 mm and a length of roughly 60 mm is hollowed perpendicularly to the longitudinal direction of the silicon core wire 1 from the side surface side of this polycrystalline silicon rod 10.

Then, as shown in Figure 1B, plate-shaped samples ($20_{CTR}$, $20_{EDG}$, and $20_{R/2}$) having a cross section perpendicular to the radial direction of the polycrystalline silicon rod 10 as a major surface and having a thickness of roughly 2 mm are taken from a site close to the silicon core wire 1 (CTR), a site close to the side surface of the polycrystalline silicon rod 10 (EDG), and an intermediate site between CTR and EGD (R/2) in this rod 11 respectively.

The site where the rod 11 is taken, the length, and the number should be appropriately determined according to the diameter of the silicon rod 10 and the diameter of the rod 11 to be hollowed, and the plate-shaped samples 20 may also be taken from any sites of the hollowed rod 11, but the sites are preferably at positions where the properties (that is, the surface temperature during deposition) of the entire silicon rod 10 can be rationally estimated.

For example, when two plate-shaped samples are obtained, the plate-shaped samples are preferably obtained from two places, positions on the center side and outside of a point half the radius from the center, with respect to the radius of the circumference of the silicon rod. Further, for example, when the positions where two samples to be compared are obtained are a position on the center side of a point one third of the radius from the center and a position on the outside of a point two thirds of the radius from the center, higher precision comparison can be performed. In addition, the number of plate-shaped samples to be compared should be two or more, and there is no particular upper limit.

In addition, the diameter of the plate-shaped sample 20 is roughly 19 mm only as an illustration, and the diameter should be properly determined in a range in which no hindrance occurs during X-ray diffraction measurement.

When the crystallinity (that is, the surface temperature during deposition) of the plate-shaped sample 20 taken by the above-described procedure from a position corresponding to a radius R from the center line of the silicon core wire 1 on which the polycrystalline silicon rod 10 is deposited is evaluated by an X-ray diffraction method, first, the above plate-shaped sample 20 is disposed at a position where Bragg reflection from a first Miller index plane ($h_1$, $k_1$, $l_1$) is detected, and in-plane-rotated around the center of the plate-shaped sample 20 as the rotation center at a rotation angle of $\varphi$ so that an X-ray irradiation region determined by a slit $\varphi$-scans the major surface of the plate-shaped sample 20, thereby obtaining a first diffraction chart showing the dependence of the intensity of Bragg reflection from the Miller index plane ($h_1$, $k_1$, $l_1$) on the rotation angle ($\varphi$) of the plate-shaped sample 20.

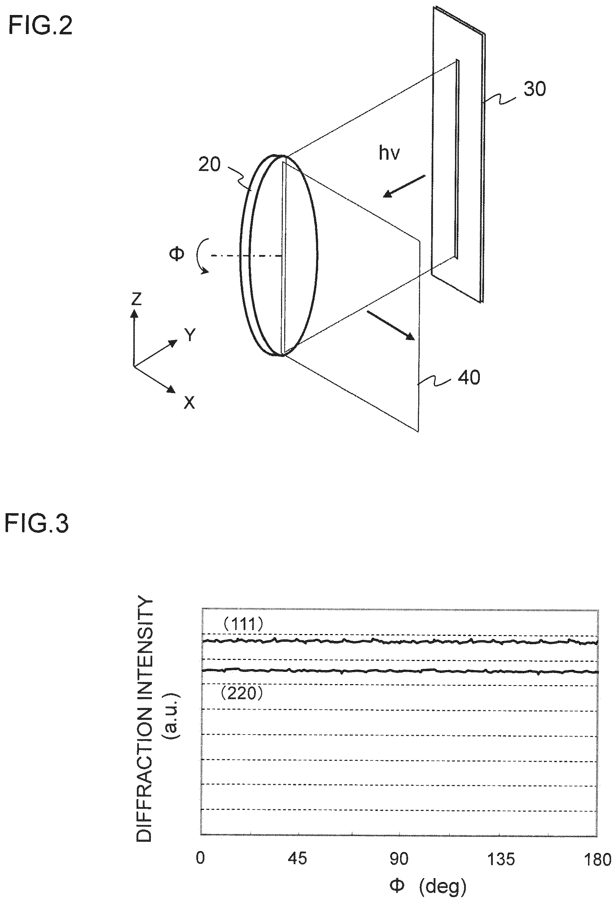

Figure 2 is a diagram for explaining the outline of an example of a measurement system when obtaining an X-ray diffraction profile from the plate-shaped sample 20 by a $\varphi$ scan method, and in the example shown in this figure, an X-ray beam 40 (Cu-Ka ray: wavelength 1.54 Å) emitted from a slit 30 and collimated is allowed to enter a narrow rectangular region determined by the slit in a region between both circumferential ends of the plate-shaped sample 20. Then, the plate-shaped sample 20 is rotated ($\varphi = 0°$ to $360°$) in the YZ plane around the center of the disk-shaped sample 20 as the rotation center so that this X-ray irradiation region scans the entire surface of the plate-shaped sample 20, thereby obtaining a first diffraction chart showing the dependence of the intensity of Bragg reflection from the Miller index plane ($h_1$, $k_1$, $l_1$) on the rotation angle ($\varphi$) of the plate-shaped sample 20.

Following this, by the same procedure as the above, the plate-shaped sample 20 is disposed at a position where Bragg reflection from a second Miller index plane ($h_2$, $k_2$, $l_2$) is detected, and in-plane-rotated around the center of the plate-shaped sample 20 as the rotation center at the rotation angle of $\varphi$ so that an X-ray irradiation region determined by the slit $\varphi$-scans the major surface of the plate-shaped sample 20, thereby obtaining a second diffraction chart showing the dependence of the intensity of Bragg reflection from the Miller index plane ($h_2$, $k_2$, $l_2$) on the rotation angle ($\varphi$) of the plate-shaped sample 20.

Figure 3 is one example of charts obtained by performing the above $\varphi$ scan measurement for Miller index planes (111) and (220).

Then, an average diffraction intensity ratio ($y = (h_1, k_1, l_1)/(h2, k_2, l_2)$) for the rotation angle ($\varphi$) is obtained from these first diffraction chart and second diffraction chart, and a surface temperature at the position corresponding to the radius R of the polycrystalline silicon rod 10 during the deposition of polycrystalline silicon is calculated based on this average diffraction intensity ratio.

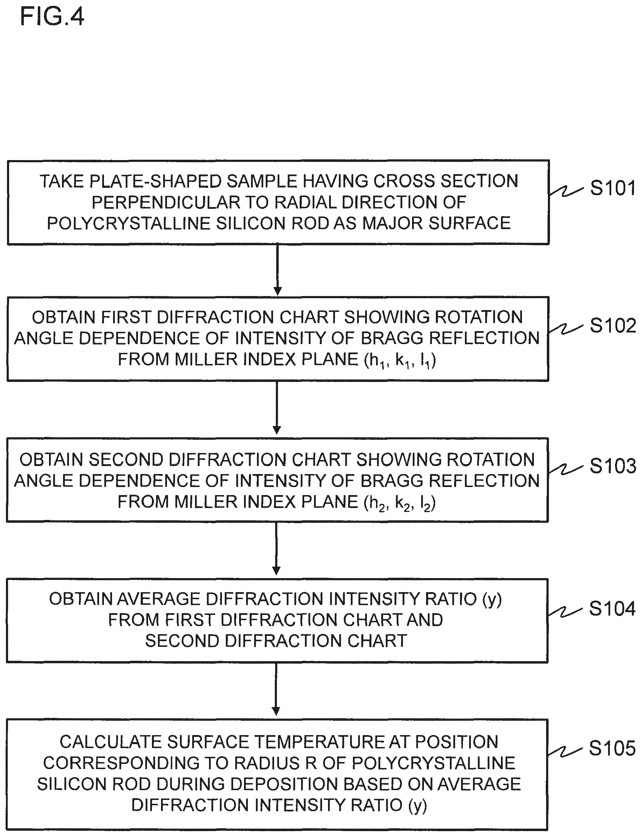

Figure 4 is a flow diagram for explaining the outline of a method for calculating the surface temperature of a polycrystalline silicon rod according to the present invention.

That is, in the method for calculating the surface temperature of a polycrystalline silicon rod according to the present invention, by the above-described procedure, a plate-shaped sample having a cross section perpendicular to the radial direction of a polycrystalline silicon rod as a major surface is taken (S101), the intensity of Bragg reflection from the Miller index plane ($h_1$, $k_1$, $l_1$) of this plate-shaped sample is obtained to obtain a first diffraction chart showing rotation angle ($\varphi$) dependence (S102), and then the intensity of Bragg reflection from the Miller index plane ($h_2$, $k_2$, $l_2$) of the plate-shaped sample is obtained to obtain a second diffraction chart showing rotation angle ($\varphi$) dependence (S103). Then, an average diffraction intensity ratio ($y = (h_1, k_1, l_1)/(h_2, k_2, l_2)$) for the rotation angle ($\varphi$) is obtained from the above-described first diffraction chart and second diffraction chart (S104), and a surface temperature at a position corresponding to the radius R of the polycrystalline silicon rod during the deposition of polycrystalline silicon is calculated based on this average diffraction intensity ratio (S105).

In this manner, the method for calculating the surface temperature of a polycrystalline silicon rod according to the present invention is a method for calculating the surface temperature of a polycrystalline silicon rod grown by the Siemens process, during a deposition process, comprising the steps of taking a plate-shaped sample having a cross section perpendicular to the radial direction of the above polycrystalline silicon rod as a major surface from a position corresponding to a radius R from the center line of a silicon core wire on which the above polycrystalline silicon rod is deposited; disposing the above plate-shaped sample at a position where Bragg reflection from a Miller index plane ($h_1$, $k_1$, $l_1$) is detected, and in-plane-rotating the above plate-shaped sample around the center of the above plate-shaped sample as the rotation center at a rotation angle of $\varphi$ so that an X-ray irradiation region determined by a slit $\varphi$-scans the major surface of the plate-shaped sample, thereby obtaining a first diffraction chart showing the dependence of the intensity of Bragg reflection from the above Miller index plane ($h_1$, $k_1$, $l_1$) on the rotation angle ($\varphi$) of the above plate-shaped sample; disposing the above plate-shaped sample at a position where Bragg reflection from a Miller index plane ($h_2$, $k_2$, $l_2$) is detected, and in-plane-rotating the above plate-shaped sample around the center of the above plate-shaped sample as the rotation center at the rotation angle of $\varphi$ so that an X-ray irradiation region determined by the slit $\varphi$-scans the major surface of the above plate-shaped sample, thereby obtaining a second diffraction chart showing the dependence of the intensity of Bragg reflection from the above Miller index plane ($h_2$, $k_2$, $l_2$) on the rotation angle ($\varphi$) of the above plate-shaped sample; obtaining an average diffraction intensity ratio ($y = (h_1, k_1, l_1)/(h_2, k_2, l_2)$) for the above rotation angle ($\varphi$) from the above first diffraction chart and the above second diffraction chart; and calculating a surface temperature at the position corresponding to the radius R of the above polycrystalline silicon rod during the deposition of polycrystalline silicon based on the above average diffraction intensity ratio.

The calculation of the surface temperature in step S105 is made, for example, based on a conversion table of an average diffraction intensity ratio (y) to a surface temperature previously obtained.

Such a conversion table is obtained, for example, based on a conversion equation obtained by expressing the relationship between an estimated temperature x and an average diffraction intensity ratio y as a regression equation when the estimated temperature based on the resistivity of a polycrystalline silicon rod calculated from the diameter of the polycrystalline silicon rod and supplied current and applied voltage to the polycrystalline silicon rod is x.

The Miller index plane ($h_1$, $k_1$, $l_1$) and the Miller index plane ($h_2$, $k_2$, $l_2$) are preferably (111) and (220).

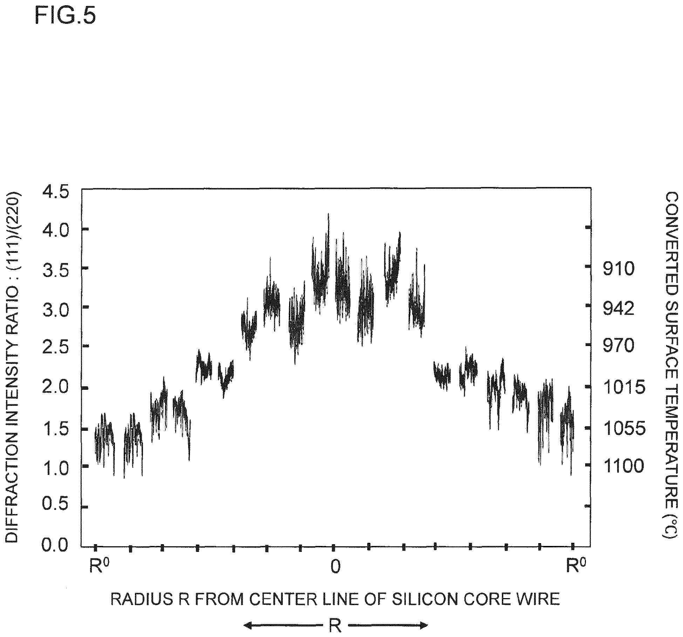

Figure 5 shows one example of the ratio between a first diffraction chart from a Miller index plane ($h_1$, $k_1$, $l_1$) and a second diffraction chart from a Miller index plane ($h_2$, $k_2$, $l_2$) ($= (h_1, k_1, l_1)/(h_2, k_2, l_2)$) obtained using plate-shaped samples taken from various R, and here, the Miller index plane ($h_1$, $k_1$, $l_1$) = (1,1,1), and the Miller index plane ($h_2$, $k_2$, $l_2$) = (2,2,0).

This figure shows the diffraction intensity ratio (y = (111)/(220): left vertical axis) obtained from each sample and the converted surface temperature corresponding to the diffraction intensity ratio (right vertical axis). The samples are obtained as follows. A polycrystalline silicon rod having a diameter of about 160 mm ($R^0 \approx 80$ mm) is grown, and 10 (a total of 20) plate-shaped samples are taken at intervals of 8 to 12 mm in the radial direction from the center line of the silicon core wire used for the deposition of the polycrystalline silicon rod.

This polycrystalline silicon rod is grown by making the surface temperature during deposition constant by a current value control method, a conventional method, and it is seen that the (111)/(220) ratio (that is, crystallinity) is different depending on the site. This means that the surface temperature of the polycrystalline silicon rod is different depending on the site. As the surface temperature during deposition becomes lower, the (111) diffraction becomes more dominant. On the other hand, as the surface temperature during deposition becomes higher, the (220) diffraction becomes more dominant.

That is, by obtaining a first diffraction chart and a second diffraction chart and obtaining an average diffraction intensity ratio ($y = (h_1, k_1, l_1)/(h_2, k_2, l_2)$) for a rotation angle ($\varphi$) by the above-described method, it is possible to calculate a surface temperature at a position corresponding to the radius R of a polycrystalline silicon rod during the deposition of polycrystalline silicon.

For such calculation of the surface temperature, it is necessary to previously confirm the correspondence relationship between an average diffraction intensity ratio (y) and a surface temperature.

Therefore, the present inventors have performed the following experiment. In a state in which the diameter of a polycrystalline silicon rod is small, the difference between the center temperature and the surface temperature is extremely small. Therefore, when the estimated temperature based on the resistivity of a polycrystalline silicon rod calculated from the diameter of the polycrystalline silicon rod and supplied current and applied voltage to the polycrystalline silicon rod is x, the estimated temperature x is a value close to the actual surface temperature. That is, when the relationship between the above estimated temperature x and the above (111)/(220) ratio in a state in which the diameter of a polycrystalline silicon rod is small is found, the surface temperature in the state can be calculated based on the relationship from the (111)/(220) ratio in a state in which deposition proceeds.

Therefore, the relationship between the above estimated temperature x and the above (111)/(220) ratio when the diameter is in the range of 10 to 30 mm is obtained.

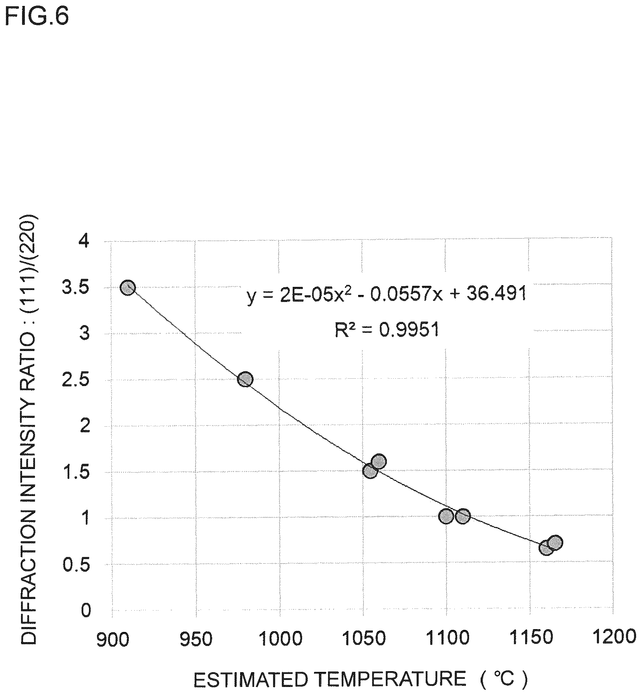

Figure 6 is a diagram showing the relationship between an estimated temperature x and (111)/(220) ratio when the diameter of a polycrystalline silicon rod is in the range of 10 to 30 mm. The equation shown in the figure is a conversion equation obtained by expressing the relationship between the estimated temperature x and the above average diffraction intensity ratio y as a regression equation.

The results shown in this figure show that when the relationship between an average diffraction intensity ratio (y) and a surface temperature (referred to as a "conversion table" for convenience) is previously obtained, the surface temperature of a polycrystalline silicon rod grown by the Siemens process, during a deposition process, can be calculated. Such a conversion table can, for example, be based on a conversion equation obtained by expressing the relationship between an estimated temperature x and the above average diffraction intensity ratio y as a regression equation when the estimated temperature based on the resistivity of a polycrystalline silicon rod calculated from the diameter of the above polycrystalline silicon rod and supplied current and applied voltage to the polycrystalline silicon rod is x.

In the actual CVD process, when the trichlorosilane gas concentration and flow rate and the hydrogen gas concentration and flow rate are changed, the surface temperature of the synthesized silicon polycrystal also changes naturally, and the change is directly reflected in a change in crystallinity. Therefore, the change appears in (111)/(220) ratio.

Therefore, when the temperature when a polycrystalline silicon rod is manufactured by the Siemens process is controlled, it is possible to, based on data on the surface temperature of a polycrystalline silicon rod calculated by the above-described method and supplied current and applied voltage during the deposition of the polycrystalline silicon rod, control supplied current and applied voltage when newly manufacturing a polycrystalline silicon rod, to control a surface temperature during the deposition process.

By using such a temperature control method, it is also possible to control the difference $\Delta T$ ($= T_c - T_s$) between the center temperature $T_c$ and the surface temperature $T_s$ of a polycrystalline silicon rod during a deposition process to control the value of residual stress in the polycrystalline silicon rod.

For example, it is also possible to consistently control $\Delta T$ during a deposition process at 70°C or less or control $\Delta T$ at less than 160°C (for example, eliminate the difference $\Delta T$ between the center temperature and the surface temperature) or, on the contrary, control $\Delta T$ at 160°C or more to grow a polycrystalline silicon rod, and the like.

As described above, when the use of polycrystalline silicon is a raw material for monocrystalline silicon manufacture by the CZ method, the polycrystalline silicon preferably has moderate ease of breaking so as to be easily crushed into a nugget shape (polycrystalline silicon ingot). Therefore, a polycrystalline silicon ingot obtained by fracturing a polycrystalline silicon rod grown by controlling $\Delta T$ at 160°C or more is suitable for this use.

On the other hand, when the use of polycrystalline silicon is a raw material for monocrystalline silicon manufacture by the FZ method, polycrystalline silicon that is not easily fractured so that a polycrystalline silicon rod does not fall, collapse, or the like in a state of being set in an FZ furnace, and has low residual stress is preferred. Therefore, a polycrystalline silicon rod grown by controlling $\Delta T$ at less than 160°C is suitable for this use.

According to an experiment by the present inventors, when $\Delta T$ is 160°C or less, the stress remaining when a CVD process is completed and the polycrystalline silicon rod is cooled to room temperature is only compressive stress, and no tensile stress occurs. In the measurement of residual stress in this experiment, a method of precisely measuring an interplanar spacing value d by an X-ray diffraction method is adopted. For the measurement directions, measurement is performed in three directions, the rr direction that is the growth direction, the $\theta\theta$ direction that is a direction at a right angle to the rr direction, and the zz direction that is the vertical direction.

Examples

The methods for calculating and controlling the surface temperature of a polycrystalline silicon rod according to the present invention will be described below by Examples.

[Example 1] (Surface Temperature during Deposition and Average Diffraction Intensity Ratio)

Disk-shaped samples (diameter 19 mm, thickness 2 mm) used for the calculation of the surface temperature were sampled according to a method described in Japanese Patent Laid-Open No. 2014-1096 (Patent Literature 3). The diameter of each of polycrystalline silicon rods obtained by deposition on silicon core wires constructed in an inverted U shape was 160 mm, and the height from the lower end to the upper end (the vicinity of the bridge) was about 1,800 mm. In addition, the above silicon core wires were disposed in the central portion and its periphery in a furnace as multi-ring type rod disposition, and polycrystalline silicon was deposited on these silicon core wires.

A cylindrical core having a diameter of 19 mm whose center was in the right angle direction (growth direction) was hollowed from each of sites in the vicinities of the bridges of three polycrystalline silicon rods obtained in this manner and sites 300 mm from the lower ends, and the above disk-shaped samples were obtained at regular intervals of 8 to 12 mm.

For X-ray diffraction measurement, the sample surface needs to be flat. Therefore, in order to remove the slicing marks, the surface was polished with an abrasive (Carborundum #300), and after the polishing, etching was performed with a mixed acid with HF:HNO$_3$ = 1:5 (HF = 50 wt%, HNO$_3$ = 70 wt%) for 1 minute for mirror finish.

For each of these disk-shaped samples, according to the method described in Japanese Patent Laid-Open No. 2014-1096 (Patent Literature 3), φ scan X-ray diffraction charts from the Miller index planes (111) and (220) were obtained, and the average value of diffraction intensity was calculated for each sample. For the average value of diffraction intensity, when no peaks are present in the diffraction chart, it is possible to make a visual determination and read the average value on the chart, but when many peaks are detected in the diffraction chart, the diffraction intensities of these peaks are also included in the amount of detection for averaging.

According to these measurement results, as the surface temperature during deposition becomes lower, the diffraction from the Miller plane (111) becomes more dominant, and as the surface temperature during deposition becomes higher, the diffraction from the Miller plane (220) becomes more dominant. The present inventors understand the reason as follows.

The electronic structure of Si is $1s^2 2s^2 2p^6 3s^2 3p^2$, and a total of four valence electrons, that is, outermost electrons, two in the 3s orbital and two in the 3p orbital, are present. Therefore, for example, when two Si molecules are formed by a CVD reaction, a total of eight electrons, four electrons present in the outermost shell of one molecule and four electrons present in the outermost shell of the other molecule, form a closed shell structure for stabilization.

Also when silicon deposits as crystals at relatively low temperature, the same as this occurs. As is well known, electron orbitals in which s orbitals and p orbitals are mixed form four equivalent orbitals forming the apexes of a regular tetrahedron at an angle of 109.5° with each other. Four apexes of these orbitals correspond to the apexes of the regular tetrahedron, and each plane of it corresponds to {111}. The {111} plane of a face-centered cubic lattice is the most dense plane in which the number of atoms per unit area is the largest and is the most stable crystal face. Therefore, crystal growth on the {111} plane is dominant at the initial stage of crystal growth, and in the CVD reaction of a trichlorosilane system, crystal growth on the {111} plane is confirmed even at a considerably low temperature such as about 600 to 700°C.

But, when the deposition temperature increases, the deposition rate increases significantly, and the number of silicon atoms involved in crystal formation increases. Therefore, from the viewpoint of structural stability as the entire crystal bulk, crystal growth on other crystal faces (for example, the {100} plane) including the {110} plane is dominant.

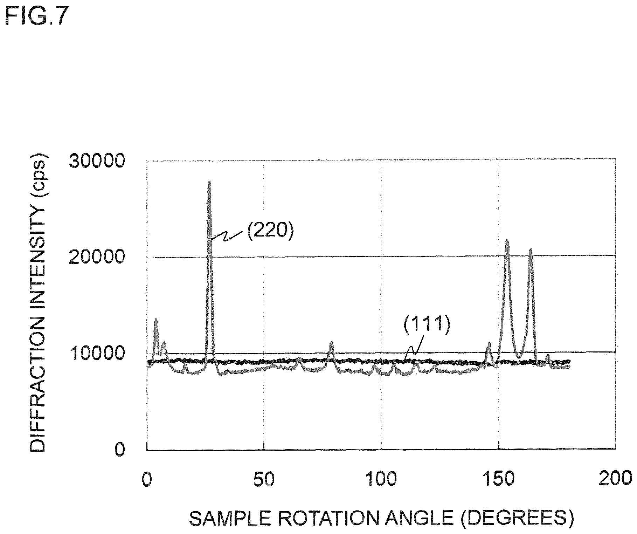

Figure 7 shows diffraction charts from a Miller index plane (111) and a Miller index plane (220) obtained by φ-scanning a plate-shaped sample taken from a position that is roughly $R^0/2$ in a polycrystalline silicon rod with diameter $R^0$ = 160 mm. No peaks are observed in the diffraction chart for the Miller index plane (111), and on the other hand a large number of peaks are observed in the diffraction chart for the Miller index plane (220). The presence of these diffraction peaks means that acicular crystals grow locally in the [220] direction during deposition.

As described above, φ scan X-ray diffraction charts from Miller index planes (111) and (220) are obtained, and the average value of diffraction intensity is obtained for each sample, and the average value is checked with the relationship between an estimated temperature x and (111)/(220) ratio shown in Figure 6 to calculate a surface temperature during deposition.

From the results, the following facts became clear. First, the surface temperature of the site in the vicinity of the bridge is higher than the surface temperature of the site 300 mm from the lower end. Second, the above surface temperature difference is smaller on the center side of the furnace. Third, the temperature difference ΔT in the growth direction is lower in the vicinity of the bridge than at the site 300 mm from the lower end. These findings are facts clarified for the first time by the present invention.

The diffraction chart ratio (= (1,1,1)/(2,2,0)) shown in Figure 5 shows results obtained using the plate-shaped samples taken from the site 300 mm from the lower end described above, in this Example.

In the example shown in this figure, the surface temperature of the central portion (the site close to the silicon core wire) during deposition is relatively low, and the surface temperature during deposition becomes relatively higher as the site becomes closer to the outermost surface side. The difference ΔT reaches 164°C.

A polycrystalline silicon rod grown under such conditions breaks easily, and is in a state in which compressive stress and tensile stress coexist in all sites of the polycrystalline silicon rod according to residual stress measurement.

A polycrystalline silicon rod was grown with temperature control for decreasing the above surface temperature difference ΔT performed and other conditions unchanged. Specifically, during deposition in the vicinity of the silicon core wire, current was supplied so that the surface temperature was 1180°C, and in all steps of deposition, the supplied current was controlled so that the surface temperature was in the target temperature range of 1150 to 1180°C.

For the polycrystalline silicon rod grown under such conditions, the above-described diffraction intensity ratio was obtained and converted to temperature. The result was that the surface temperature difference ΔT was controlled at 48 to 73°C in all sites. In addition, the residual stress of this polycrystalline silicon rod was measured, and only compressive stress was noted in all sites.

A polycrystalline silicon rod for obtaining polycrystalline silicon ingots (nuggets) for silicon single crystal growth by the CZ method is desirably easily fractured. For this purpose, a higher value of tensile stress in residual stress in the polycrystalline silicon rod is more advantageous. But, drawbacks of such a polycrystalline silicon rod are that the polycrystalline silicon rod collapses easily in the reaction furnace during the cooling step after the completion of the deposition step, and the like. Therefore, there is an appropriate upper limit value of tensile stress remaining in the polycrystalline silicon rod.

In order to set residual tensile stress in the polycrystalline silicon rod equal to or less than the above-described appropriate upper limit value, the difference $\Delta T$ between the surface temperature of the central portion (the site close to the silicon core wire) during deposition and the surface temperature of the outermost surface portion during deposition during the deposition step needs to be controlled at 200°C or less.

On the other hand, a polycrystalline silicon rod for obtaining polycrystalline silicon for silicon single crystal growth by the FZ method or polycrystalline silicon for recharge during silicon single crystal growth by the CZ method is desirably not easily fractured, and a smaller value of the above $\Delta T$ is better.

According to the present invention, it is possible to control with high precision the surface temperature of a polycrystalline silicon rod during a deposition process when manufacturing a polycrystalline silicon rod by the Siemens process, and therefore it is possible to also control the above $\Delta T$ with high precision.

That is, by manufacturing a polycrystalline silicon rod by controlling the difference $\Delta T$ (= $T_c$ - $T_s$) between the center temperature $T_c$ and the surface temperature $T_s$ of a polycrystalline silicon rod during a deposition process using the above-described temperature control method, to control the value of residual stress in the polycrystalline silicon rod, it is possible to distinctively make a polycrystalline silicon rod for obtaining polycrystalline silicon ingots (nuggets) for silicon single crystal growth by the CZ method, and a polycrystalline silicon rod for obtaining polycrystalline silicon for silicon single crystal growth by the FZ method or polycrystalline silicon for recharge during silicon single crystal growth by the CZ method.

For example, in the case of a polycrystalline silicon rod for obtaining polycrystalline silicon ingots (nuggets) for silicon single crystal growth by the CZ method, the above $\Delta T$ is controlled at 160°C or more to grow the polycrystalline silicon rod.

On the other hand, in the case of a polycrystalline silicon rod for obtaining polycrystalline silicon for silicon single crystal growth by the FZ method or polycrystalline silicon for recharge during silicon single crystal growth by the CZ method, the above $\Delta T$ is controlled at less than 160°C to grow the polycrystalline silicon rod. Preferably, the above $\Delta T$ is consistently controlled at 70°C or less.

[Example 2] (Surface Temperature Control during Deposition Process)

A polycrystalline silicon rod having a diameter of 160 mm was newly grown while, based on data on the surface temperature of a polycrystalline silicon rod calculated based on the results shown in Figure 5 and supplied current and applied voltage during the deposition of the polycrystalline silicon rod, the supplied current and the applied voltage when newly manufacturing a polycrystalline silicon rod was controlled to control a surface temperature during the deposition process.

Plate-shaped samples were taken from various sites of this polycrystalline silicon rod, and the surface temperature during deposition was calculated. The results are summarized in Table 1.

[Table 1]

| Radial direction (mm) | Vicinity of bridge (°C) | 300 mm from lower end (°C) | Height direction $\Delta T$ (°C) |
|---|---|---|---|
| +80 | 1154 | 1155 | -1 |
| +60 | 1156 | 1156 | 0 |
| +50 | 1142 | 1148 | -6 |
| +40 | 1155 | 1110 | 45 |
| +30 | 1159 | 1157 | 2 |
| +20 | 1180 | 1162 | 18 |
| +10 | 1180 | 1183 | -3 |
| 0 | - | - | - |
| -10 | 1188 | 1160 | 28 |
| -20 | 1190 | 1180 | 10 |
| -30 | 1162 | 1160 | 2 |

(continued)

| Radial direction (mm) | Vicinity of bridge (°C) | 300 mm from lower end (°C) | Height direction ΔT (°C) |
|---|---|---|---|
| -40 | 1160 | 1135 | 25 |
| -50 | 1150 | 1137 | 13 |
| -60 | 1155 | 1145 | 10 |
| -80 | 1154 | 1150 | 4 |
| Growth direction ΔT (°C) | 48 | 73 | |

The residual stress in this polycrystalline silicon rod was only compressive stress in any of the above-described three directions. In addition, a silicon single crystal was grown by the FZ method using as a raw material a polycrystalline silicon rod grown under the same conditions, and troubles such as collapse and fall did not occur.

[Example 3] (Surface Temperature Difference ΔT during Deposition Process and Residual Stress)

The relationship between a surface temperature difference ΔT (°C) during a deposition process and residual stress was obtained. The results are summarized in Table 2.

When ΔT is 160°C or more, the remaining of compressive stress and tensile stress is noted. On the other hand, when ΔT is less than 160°C, only the remaining of compressive stress is noted, and the remaining of tensile stress is not noted.

In addition, when ΔT exceeds 170°C, collapse in a CVD reaction furnace may occur. When ΔT exceeds 200°C, collapse in a CVD reaction furnace frequently occurs, which is dangerous, and therefore this case was excluded in this Example. Further, the degree of difficulty of fracturing by a hammer changes at ΔT = 160°C. When ΔT is 160°C or more, the polycrystalline silicon rod is easily fractured. When ΔT is less than 160°C, the polycrystalline silicon rod is not easily fractured. When ΔT is 170°C or more, the polycrystalline silicon rod is extremely brittle to the extent that one hesitates to hold the polycrystalline silicon rod in an FZ furnace. When a polycrystalline silicon raw material obtained from a polycrystalline silicon rod grown with ΔT = 165°C was held in an FZ furnace, fall in the furnace sometimes occurred.

[Table 2]

| ΔT | 42 | 89 | 140 | 156 | 160 | 165 | 177 | 182 | 195 |
|---|---|---|---|---|---|---|---|---|---|
| Compressive stress | ○ | ○ | ○ | ○ | ○ | ○ | ○ | ○ | ○ |
| Tensile stress | × | × | × | × | ○ | ○ | ○ | ○ | ○ |
| Collapse in furnace | No | No | No | No | No | No | Yes | Yes | Yes |
| Degree of difficulty of fracturing | Difficult | Difficult | Difficult | Difficult | Easy | Easy | Brittle | Brittle | Brittle |
| Fall in furnace | No | No | No | No | No | Yes | Impossible | Impossible | Impossible |

Industrial Applicability

The present invention provides a technique for manufacturing a polycrystalline silicon rod based on a new method for controlling with high precision the surface temperature of a polycrystalline silicon rod during a deposition process when manufacturing a polycrystalline silicon rod by the Siemens process.

Reference Signs List

1    silicon core wire

10   polycrystalline silicon rod

11   rod

20   plate-shaped sample

30   slit

40   X-ray beam

**Claims**

1.  A method for calculating a surface temperature of a polycrystalline silicon rod grown by a Siemens process, during a deposition process, comprising steps of:

    taking a plate-shaped sample having a cross section perpendicular to a radial direction of the polycrystalline silicon rod as a major surface from a position corresponding to a radius R from a center line of a silicon core wire on which the polycrystalline silicon rod is deposited;
    disposing the plate-shaped sample at a position where Bragg reflection from a Miller index plane $(h_1, k_1, l_1)$ is detected, and in-plane-rotating the plate-shaped sample around a center of the plate-shaped sample as a rotation center at a rotation angle of $\varphi$ so that an X-ray irradiation region determined by a slit $\varphi$-scans the major surface of the plate-shaped sample, thereby obtaining a first diffraction chart showing dependence of an intensity of Bragg reflection from the Miller index plane $(h_1, k_1, l_1)$ on the rotation angle $(\varphi)$ of the plate-shaped sample;
    disposing the plate-shaped sample at a position where Bragg reflection from a Miller index plane $(h_2, k_2, l_2)$ is detected, and in-plane-rotating the plate-shaped sample around the center of the plate-shaped sample as the rotation center at the rotation angle of $\varphi$ so that an X-ray irradiation region determined by the slit $\varphi$-scans the major surface of the plate-shaped sample, thereby obtaining a second diffraction chart showing dependence of an intensity of Bragg reflection from the Miller index plane $(h_2, k_2, l_2)$ on the rotation angle $(\varphi)$ of the plate-shaped sample;
    obtaining an average diffraction intensity ratio ($y = (h_1, k_1, l_1)/(h_2, k_2, l_2)$) for the rotation angle $(\varphi)$ from the first diffraction chart and the second diffraction chart; and
    calculating a surface temperature at the position corresponding to the radius R of the polycrystalline silicon rod during deposition of polycrystalline silicon based on the average diffraction intensity ratio.

2.  The method for calculating a surface temperature of a polycrystalline silicon rod according to claim 1, wherein the calculation of the surface temperature is made based on a conversion table of an average diffraction intensity ratio (y) to a surface temperature previously obtained.

3.  The method for calculating a surface temperature of a polycrystalline silicon rod according to claim 1 or 2, wherein the conversion table is based on a conversion equation obtained by expressing a relationship between an estimated temperature x and the average diffraction intensity ratio y as a regression equation when the estimated temperature based on a resistivity of a polycrystalline silicon rod calculated from a diameter of the polycrystalline silicon rod and supplied current and applied voltage to the polycrystalline silicon rod is x.

4.  The method for calculating a surface temperature of a polycrystalline silicon rod according to claim 1 or 2, wherein the Miller index plane $(h_1, k_1, l_1)$ and the Miller index plane $(h_2, k_2, l_2)$ are (111) and (220).

5. A method for controlling a surface temperature of a polycrystalline silicon rod, being a temperature control method when manufacturing a polycrystalline silicon rod by a Siemens process, the method comprising, based on data on a surface temperature of a polycrystalline silicon rod calculated by the method according to any one of claims 1 to 4 and supplied current and applied voltage during deposition of the polycrystalline silicon rod, controlling supplied current and applied voltage when newly manufacturing a polycrystalline silicon rod, to control a surface temperature during a deposition process.

6. A method for manufacturing a polycrystalline silicon rod, comprising controlling a difference $\Delta T$ (= $T_c$ - $T_s$) between a center temperature $T_c$ and a surface temperature $T_s$ of a polycrystalline silicon rod during a deposition process using the temperature control method according to claim 5, to control a value of residual stress in the polycrystalline silicon rod.

7. The method for manufacturing a polycrystalline silicon rod according to claim 6, wherein the $\Delta T$ during the deposition process is consistently controlled at 70°C or less.

8. A polycrystalline silicon rod grown by controlling the $\Delta T$ at 160°C or more in the method for manufacturing a polycrystalline silicon rod according to claim 6.

9. A polycrystalline silicon ingot obtained by fracturing the polycrystalline silicon rod according to claim 8.

10. A polycrystalline silicon rod grown by controlling the $\Delta T$ at less than 160°C in the method for manufacturing a polycrystalline silicon rod according to claim 6.

## FIG.1A

## FIG.1B

FIG.2

FIG.3

# FIG.4

TAKE PLATE-SHAPED SAMPLE HAVING CROSS SECTION
PERPENDICULAR TO RADIAL DIRECTION OF
POLYCRYSTALLINE SILICON ROD AS MAJOR SURFACE $\quad$ S101

OBTAIN FIRST DIFFRACTION CHART SHOWING ROTATION
ANGLE DEPENDENCE OF INTENSITY OF BRAGG REFLECTION $\quad$ S102
FROM MILLER INDEX PLANE ($h_1$, $k_1$, $l_1$)

OBTAIN SECOND DIFFRACTION CHART SHOWING ROTATION
ANGLE DEPENDENCE OF INTENSITY OF BRAGG REFLECTION $\quad$ S103
FROM MILLER INDEX PLANE ($h_2$, $k_2$, $l_2$)

OBTAIN AVERAGE DIFFRACTION INTENSITY RATIO (y)
FROM FIRST DIFFRACTION CHART AND $\quad$ S104
SECOND DIFFRACTION CHART

CALCULATE SURFACE TEMPERATURE AT POSITION
CORRESPONDING TO RADIUS R OF POLYCRYSTALLINE
SILICON ROD DURING DEPOSITION BASED ON AVERAGE $\quad$ S105
DIFFRACTION INTENSITY RATIO (y)

FIG.5

FIG.6

$y = 2E\text{-}05x^2 - 0.0557x + 36.491$

$R^2 = 0.9951$

DIFFRACTION INTENSITY RATIO : (111)/(220)

ESTIMATED TEMPERATURE（℃）

FIG.7

## INTERNATIONAL SEARCH REPORT

International application No.

PCT/JP2015/003022

### A. CLASSIFICATION OF SUBJECT MATTER
*G01N23/207*(2006.01)i, *C01B33/035*(2006.01)i

According to International Patent Classification (IPC) or to both national classification and IPC

### B. FIELDS SEARCHED

Minimum documentation searched (classification system followed by classification symbols)
G01N23/207, C01B33/035

Documentation searched other than minimum documentation to the extent that such documents are included in the fields searched
Jitsuyo Shinan Koho       1922–1996   Jitsuyo Shinan Toroku Koho   1996–2015
Kokai Jitsuyo Shinan Koho   1971–2015   Toroku Jitsuyo Shinan Koho    1994–2015

Electronic data base consulted during the international search (name of data base and, where practicable, search terms used)
JSTPlus/JST7580(JDreamIII)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2013-217653 A  (Shin-Etsu Chemical Co.,<br>Ltd.),<br>24 October 2013 (24.10.2013),<br>paragraphs [0021] to [0054]; fig. 1 to 11<br>& US 2015/0047554 A1    & WO 2013/150758 A1<br>& EP 2835632 A1        & CN 104220867 A<br>& KR 10-2014-0142267 A | 9<br>1-8,10 |
| X<br>Y<br>A | JP 2011-37699 A  (Mitsubishi Materials Corp.),<br>24 February 2011 (24.02.2011),<br>paragraphs [0037] to [0040], [0044] to [0046];<br>fig. 9(c), 12(c)<br>& US 2011/0014468 A1    & US 2013/0295401 A1<br>& EP 2275387 A2        & CN 101956232 A<br>& KR 10-2011-0007043 A | 8,10<br>9<br>1-7 |

☒ Further documents are listed in the continuation of Box C.        ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>01 September 2015 (01.09.15) | Date of mailing of the international search report<br>15 September 2015 (15.09.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (July 2009)

21

**INTERNATIONAL SEARCH REPORT**

| International application No. |
|---|
| PCT/JP2015/003022 |

C (Continuation).   DOCUMENTS CONSIDERED TO BE RELEVANT

| Category* | Citation of document, with indication, where appropriate, of the relevant passages | Relevant to claim No. |
|---|---|---|
| A | Akira KAWABATA, "Si technology and electronic materials", Journal of the Society of Materials Science, Japan, 15 April 1986 (15.04.1986), vol.35, no.391, pages 329 to 336 | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004532786 A
- JP 2001146499 A
- JP 2014001096 A